# DEMANDE DE BREVET EUROPEEN

(11) **EP 2 876 841 A1**
(43) Date de publication de la demande: **27.05.2015**
(21) Numéro de dépôt: 14191034.9
(22) Date de dépôt: 30.10.2014
(51) Int. Cl.: H04L 12/24, G06F 9/54

(54) **DISPOSITIF DE COMMANDE POUVANT SE CONNECTER À UN RÉSEAU DE COMMUNICATION RELIANT UNE INTERFACE DE COMMANDE À UN ÉQUIPEMENT**

(30) Priorité: 22.11.2013 FR 1361505
(71) Demandeur: Schneider Electric Industries SAS, 92500 Rueil-Malmaison (FR)
(72) Inventeur: Chiche, Thierry, 38330 Saint Ismier (FR)
(74) Mandataire: Bié, Nicolas

(57) **Abrégé**

L'invention concerne un dispositif de commande (3) destiné à se connecter à un réseau de communication (R) sur lequel circulent des trames échangées entre un équipement (2) d'automatisme et une interface de commande (1) dudit équipement, ledit dispositif comportant :
• Un module d'enregistrement (36) agencé pour commander un enregistrement d'au moins une trame émise par l'interface de commande (1) à destination de l'équipement (2) d'automatisme, une action étant associée à ladite trame enregistrée,
• Un module de commande (37) agencé pour :
• réémettre ladite trame (T1-Tn) mémorisée à destination de l'équipement (2) d'automatisme lorsque ladite action (A1-An) est commandée,
• mettre en attente et mémoriser toutes les trames échangées entre l'interface de commande (1) et l'équipement (2) d'automatisme pendant l'exécution de ladite action,
• renvoyer, après la fin de l'exécution de ladite action (A1-An), toutes les trames mises en attente pendant l'exécution de ladite action.

## Description

### Domaine technique de l'invention

La présente invention se rapporte à un dispositif de commande destiné à se connecter à un réseau de communication reliant une interface de commande à un équipement à commander par ladite interface de commande.

### Etat de la technique

Dans le domaine industriel, il est connu d'employer une interface de commande de type graphique pour commander un ou plusieurs équipements tels que par exemple des équipements d'automatisme. L'interface de commande dispose de fonctions permettant de recevoir et visualiser l'état de chaque équipement commandé, d'envoyer des commandes pour modifier leur mode de marche, pour arrêter ou démarrer chaque équipement.

Lorsqu'elle est de type graphique, les fonctions disponibles pour l'opérateur sont réparties sur plusieurs pages à faire défiler. Pour certaines opérations, l'opérateur doit donc naviguer dans plusieurs menus pour sélectionner les fonctions souhaitées et envoyer les signaux de commandes correspondants sur le réseau de communication, à destination des équipements commandés.

Pour des opérations simples, par exemple de démarrage, de mise en veille ou d'arrêt, la navigation dans les différents menus de l'interface de commande peut s'avérer longue et fastidieuse. Par ailleurs, si une même interface est dédiée à la commande de plusieurs équipements distincts, certaines opérations devront être effectuées plusieurs fois pour chacun des équipements commandés.

Il est connu du brevet DE102007048250 une solution dans laquelle un équipement d'automatisme est capable de créer une file d'attente de trames à envoyer à une machine.

Le but de l'invention est de proposer un dispositif de commande qui permet à un opérateur d'éviter une navigation longue et fastidieuse dans les menus d'une interface de commande, notamment de type graphique, et de commander chaque équipement ou plusieurs équipements à la fois de manière simple et rapide.

### Exposé de l'invention

Ce but est atteint par un dispositif de commande destiné à se connecter à un réseau de communication sur lequel circulent des trames échangées entre un équipement d'automatisme à commander et une interface de commande connectée audit équipement d'automatisme à travers ledit réseau de communication, ledit dispositif étant agencé pour suppléer ladite interface de commande et comportant :
- un module d'enregistrement agencé pour enregistrer au moins une trame émise par l'interface de commande et reçue par l'équipement d'automatisme, une action étant associée à ladite trame enregistrée,
- un module de commande agencé pour réémettre ladite trame mémorisée à destination de l'équipement d'automatisme lorsque ladite action est commandée,
- un organe de commande agencé pour commander ladite action,
- le module de commande étant agencé pour mettre en attente et mémoriser toutes les trames échangées entre l'interface de commande et l'équipement d'automatisme pendant l'exécution de ladite action,
- Le module de commande étant agencé pour renvoyer, après la fin de l'exécution de ladite action, toutes les trames mises en attente pendant l'exécution de ladite action.

Selon une particularité, le dispositif comporte une première interface réseau destinée à se connecter à l'interface de commande et une deuxième interface réseau destinée à se connecter à l'équipement d'automatisme.

Selon une autre particularité, le dispositif comporte un commutateur intelligent agencé pour gérer chaque trame circulant sur le réseau de communication en provenance de l'interface de commande ou de l'équipement d'automatisme.

Selon une autre particularité, le dispositif comporte un module de détection du type de réseau de communication et d'auto-configuration pour communiquer sur ledit réseau de communication.

Selon une autre particularité, le dispositif comporte un analyseur réseau commandé par le module d'enregistrement et agencé pour enregistrer ladite au moins une trame.

Selon une autre particularité, le dispositif est agencé pour fonctionner selon l'un des trois modes suivants : mode enregistrement, mode commande et mode normal.

Selon une autre particularité, le dispositif comporte une interface homme-machine, actionnable par un opérateur, un émetteur couplé à un récepteur ou un système logique exécutant ladite action en tenant compte de la valeur prise par un ou plusieurs paramètres déterminés.

### Brève description des figures

D'autres caractéristiques et avantages vont apparaître dans la description détaillée qui suit faite en regard des dessins annexés dans lesquels :

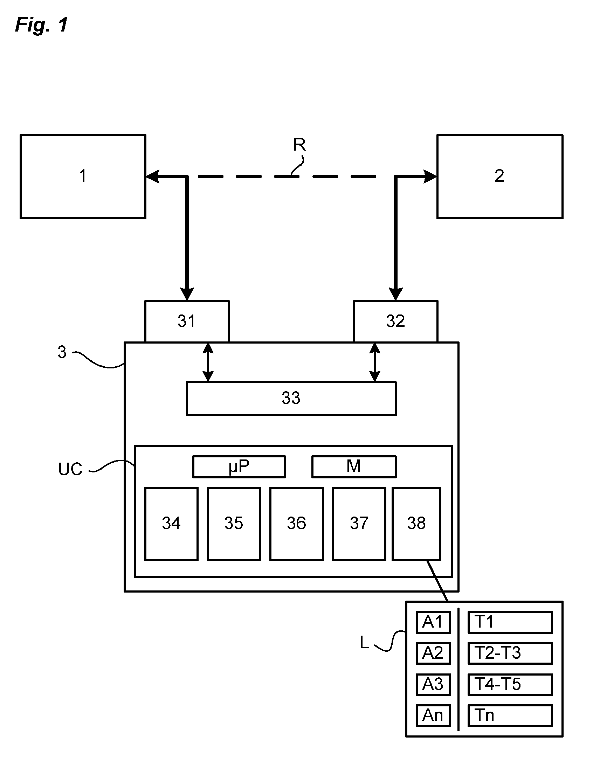

- la figure 1 représente, de manière schématique, le dispositif de commande de l'invention et son positionnement dans une architecture d'automatisme.

### Description détaillée d'au moins un mode de réalisation

L'invention s'insère notamment dans une architecture d'automatisme dans laquelle une interface de commande 1, préférentiellement de type graphique, commande un ou plusieurs équipements 2, préférentiellement des équipements d'automatisme, à travers un réseau de communication R. Le réseau de communication est par exemple de type Ethernet, Modbus ou d'une autre solution connue. Le réseau de communication R est préférentiellement de type filaire.

Par équipement d'automatisme 2, on entend par exemple au moins un contrôleur logique programmable, au moins un variateur de vitesse ou toute autre solution de commande d'une application ou processus industriel.

Par interface de commande 1, on entend tout système permettant de commander un équipement. Il peut donc s'agir d'un ensemble de boutons, d'un écran tactile, ou de toute combinaison entre ces différents éléments.

Des données sont échangées sur le réseau de communication R entre une interface de commande 1 et un équipement 2 sous forme d'une ou plusieurs trames. Une trame correspond par exemple à une commande envoyée par l'interface de commande 1 à destination de l'équipement 2 ou à une information renvoyée par l'équipement 2 à destination de l'interface de commande 1, par exemple une information d'état ou de diagnostic.

L'invention concerne un dispositif de commande 3 destiné à venir se connecter sur le réseau de communication R reliant l'interface de commande 1 à l'équipement 2 commandé.

Ce dispositif de commande 3 pourra par exemple s'immiscer dans l'architecture d'automatisme existante en vue d'espionner et d'enregistrer le trafic sur le réseau de communication R. Dans une réalisation, les trames échangées entre l'interface de commande 1 et l'équipement 2 seront capturées par le dispositif de commande 3. L'opérateur pourra notamment sélectionner une ou plusieurs trames T1-Tn capturées et les associer à une action A1-An. Le dispositif de commande 3 est ensuite agencé pour permettre l'envoi des trames T1-Tn associées aux actions A1-An ainsi définies.

Le dispositif de commande 3 pourra se présenter par exemple sous la forme d'une interface homme-machine simplifiée composée de un ou plusieurs boutons connectée physiquement sur le réseau.

Le dispositif de commande 3 de l'invention comporte des moyens de communication pour communiquer sur le réseau de communication R avec l'interface de commande 1 et l'équipement 2. Il comporte également des moyens de traitement UC comprenant notamment un microprocesseur µP et des moyens de mémorisation M. Les moyens de traitement UC sont agencés pour faire fonctionner le dispositif de commande selon les différents modes décrits ci-dessus.

De manière plus fonctionnelle et en référence à la figure 1, les moyens de communication du dispositif de commande de l'invention comportent plus précisément :
- Une première interface réseau 31 et une deuxième interface réseau 32. Le dispositif de commande 3 est connecté au réseau de communication R de manière à être relié par sa première interface réseau 31 à l'interface de commande 1 et par sa deuxième interface réseau 32 à l'équipement 2.
- Un commutateur intelligent 33 relié à la fois à la première interface réseau 31 et à la deuxième interface réseau 32.

Les moyens de traitement UC du dispositif de commande 3 comportent pour leur part :
- Un module de détection 34 du type de réseau de communication R et d'auto-configuration pour se connecter à ce réseau R.
- Un analyseur réseau 35.
- Un module d'enregistrement 36.
- Un module de commande 37.
- Un module de génération 38 d'une liste L des actions programmées par l'opérateur et des trames T1-Tn sélectionnées associées à chaque action A1-An.

A l'aide de ces différents composants, le dispositif de commande 3 fonctionne selon trois modes de fonctionnement distincts :
- Un mode normal.
- Un mode enregistrement.
- Un mode commande.

Le mode normal est le mode de fonctionnement dans lequel le dispositif de commande 3 n'intervient pas. En mode normal, toutes les trames détectées sur une interface réseau sont routées automatiquement par le commutateur intelligent 33 sur l'autre interface réseau de manière à ne pas perturber les échanges entre l'interface de commande 1 et l'équipement 2.

Le mode enregistrement est le mode de fonctionnement dans lequel des trames normalement échangées entre l'interface de commande 1 et l'équipement 2 sont enregistrées dans le dispositif de commande 3. Le mode enregistrement pourra être de plusieurs types.

Un premier type du mode enregistrement consiste à charger directement dans le dispositif de commande des trames échangées entre l'interface de commande 1 et l'équipement 2 dans le dispositif de commande, ces trames étant préalablement connues, par détection à l'aide d'un analyseur réseau ou un autre moyen. L'action associée à chacune des trames chargées dans le dispositif de commande 3 pourra être sélectionnée préalablement et chargée en compagnie des trames ou sélectionnée in situ sur le dispositif de commande. Ce mode de fonctionnement présente l'avantage d'être fiable et peu coûteux car la détection et la sélection des trames pertinentes est réalisée en amont, à l'aide d'un simple ordinateur.

Un deuxième type du mode enregistrement attribué au dispositif de commande consiste en un mode apprentissage doté de plusieurs phases distinctes :
- Une phase de capture dans laquelle le dispositif de commande 3 enregistre les trames échangées sur le réseau de communication R entre l'interface de commande 1 et l'équipement 2.
- Une phase de sélection dans laquelle l'opérateur définit une action A1-An et sélectionne la ou les trames T1-Tn capturées à associer à cette action.
- Une phase de mémorisation mise en oeuvre par le module de génération 38 et dans laquelle les trames T1-Tn sélectionnées sont mémorisées dans les moyens de mémorisation sous la forme de la liste L, en association avec les actions A1-An définies par l'opérateur.

Le mode commande ne peut être mis en oeuvre que si le mode enregistrement est terminé. Dans le mode commande, le dispositif de commande 3 est apte à jouer au moins l'une des actions A1-An définies pendant le mode enregistrement et à émettre les trames T1-Tn qui correspondent à cette action. La commande d'exécution de l'action peut provenir par exemple :
- d'une interface homme-machine associée au dispositif 3, telle que par exemple un bouton-poussoir, actionné par l'opérateur, ou
- d'un émetteur couplé à un récepteur associé au dispositif, ou
- d'un système logique envoyant la commande d'exécution en tenant compte de certains critères, tels que par exemple la valeur prise par un ou plusieurs paramètres (plage horaire, température...).

Dans le mode commande, afin d'émettre la ou les trames associées à l'action commandée sans générer de perturbations, toutes les trames détectées sur l'une ou l'autre des deux interfaces réseaux 31, 32 sont mémorisées temporairement dans les moyens de mémorisation M afin d'être réémises une fois que la séquence d'émission de la ou des trames associées à l'action commandée est terminée. Ces trames mémorisées sont réémises dans l'ordre de leur réception.

Les composants décrits ci-dessus fonctionnent de la manière suivante dans les différents modes de fonctionnement définis ci-dessus :

### 1) Commutateur intelligent

- En mode normal, il est agencé pour router automatiquement toutes les trames détectées sur une interface réseau vers l'autre interface réseau de manière à ne pas perturber la communication normale établie entre l'interface de commande 1 et l'équipement 2.
- En mode commande, le commutateur intelligent 33 fonctionne en suivant plusieurs étapes successives :
   - Une étape d'attente au cours de laquelle le commutateur intelligent 33 attend la fin des échanges de données entre l'interface de commande 1 et l'équipement 2.
   - Une étape d'émission de la ou des trames T1-Tn qui correspondent à l'action A1-An demandée par l'opérateur.
   - Une étape de mémorisation temporaire dans les moyens de mémorisation M de toutes les trames détectées sur la première interface réseau 31 et sur la deuxième interface réseau 32 lors de l'émission de la ou des trames qui correspondent à l'action commandée par l'opérateur.
   - Une étape de réémission des trames mémorisées lors de l'étape précédente.

### 2) Module de détection du type de réseau de communication et d'auto-configuration pour se connecter à ce réseau

Ce module de détection 34 logiciel est agencé pour déterminer le type de réseau de communication R sur lequel le dispositif 3 se connecte et pour déterminer les paramètres nécessaires pour que le dispositif 3 puisse communiquer sur ledit réseau de communication R en vue de les mémoriser dans ses moyens de mémorisation M. Si le réseau de communication R est de type Ethernet, il s'agit alors pour le module de détecter les paramètres IP ("Internet Protocol"), notamment les adresses IP de l'interface de commande 1 et de l'équipement 2 et de se les approprier à chaque envoi d'une trame dans le mode commande. Si le réseau de communication R est implémenté sur un bus de terrain, par exemple de type Modbus, le module détecte la configuration des paramètres de communication.

Ce module de détection est optionnel et une saisie du type de réseau et des paramètres réseau pourrait être réalisée directement sur le dispositif de commande 3.

### 3) Analyseur réseau

- Dans le mode enregistrement de deuxième type décrit ci-dessus :
   - L'analyseur réseau 35 est agencé pour enregistrer dans les moyens de mémorisation M toutes les trames détectées sur chaque interface réseau 31, 32.
   - L'analyseur réseau 35 détermine l'adresse réseau de l'interface de commande 1 afin de pouvoir se substituer à elle lors de l'exécution d'une action.
- En mode normal, l'analyseur réseau 35 n'intervient pas.
- En mode commande :
   - L'analyseur réseau 35 est agencé pour détecter la fin des échanges de données entre les deux interfaces réseaux 31, 32.
   - L'analyseur réseau 35 est agencé pour démarrer la mémorisation temporaire dans les moyens de mémorisation M des trames détectées sur la première interface réseau 31 ou sur la deuxième interface réseau 32 pendant l'exécution d'une action A1-An définie par l'opérateur.

### 4) Module d'enregistrement

Il intervient uniquement après activation du mode enregistrement et il intervient différemment selon le mode enregistrement choisi.

Dans le fonctionnement en mode enregistrement de premier type, il gère l'enregistrement des trames dans les moyens de mémorisation.

Dans le fonctionnement en mode enregistrement de deuxième type, il fonctionne en exécutant les étapes suivantes :
- Etape 1 : Il est agencé pour commander le début de l'enregistrement des trames détectées par l'analyseur réseau 35 sur la première interface réseau 31, c'est-à-dire les trames provenant de l'interface de commande 1.
- Etape 2 : Il est agencé pour commander l'arrêt de l'enregistrement des trames.
- Etape 3 : le module d'enregistrement 36 est agencé pour rejouer les trames enregistrées et demander à l'opérateur de valider ou non la mémorisation de chaque trame dans les moyens de mémorisation M.
- Etape 4 : Le module d'enregistrement 36 est agencé pour proposer à l'opérateur d'associer une action A1-An à une ou plusieurs des trames T1-Tn mémorisées dans les moyens de mémorisation M.

### 5) Module de commande

Le module de commande 37 est activé sur le dispositif 3 lorsque le mode commande est activé par l'opérateur. Il ne peut être utilisé que si le mode enregistrement a été mené à son terme. Il est agencé pour :
- Détecter la fin des échanges de trames entre les deux interfaces réseaux 31, 32 du dispositif lorsque le dispositif 3 est en mode normal.
- Emettre la ou les trames T1-Tn associées à l'action A1-An sélectionnée par l'opérateur depuis le dispositif de commande 3, en prenant l'identifiant de l'interface de commande 1, afin de faire croire à l'équipement 2 que l'action provient de l'interface de commande 1.
- Démarrer la mémorisation temporaire des trames détectées sur chaque interface réseau 31, 32 lorsque l'action A1-An a été commandée afin de ne pas perturber la communication.
- Une fois la ou les trames T1-Tn correspondant à l'action A1-An commandée émises, émettre toutes les trames mémorisées temporairement durant le traitement de l'action commandée.
- Désactiver le mode commande.

### 6) Module de génération de la liste des actions programmées par l'opérateur et des trames sélectionnées associées à chaque action

Ce module 38 est agencé pour générer la liste des actions A1-An programmées par l'opérateur lors du mode enregistrement, en association avec les trames T1-Tn sélectionnées pour chaque action programmée. Ce module 38 est agencé pour enrichir cette liste à chaque nouvelle action définie par l'opérateur.

Le dispositif de l'invention permet donc de simuler une action qui serait normalement commandée depuis l'interface de commande 1. Il peut ainsi agir sur l'équipement 2 en parallèle de l'interface de commande 1 et la suppléer pour certaines actions. Le dispositif de commande 3 de l'invention est d'un fonctionnement très simple. Il ne génère aucune perturbation sur les communications entre l'interface de commande 1 et l'équipement 2.

Il permettra de commander à distance ou localement les modes de marche des équipements. L'envoi des commandes pourra être effectué manuellement ou de manière automatique, par exemple en utilisant une horloge programmée. Un superviseur pourra également être employé pour commander plusieurs dispositifs de commande en parallèle, le superviseur envoyant des commandes à chaque dispositif, par une commande manuelle ou automatique.

Par ailleurs, le dispositif de commande 3 est par exemple employé pour réduire le talon de consommation électrique d'une usine en centralisant dans un seul dispositif de commande 3 la commande de plusieurs équipements 2 répartis dans l'usine et normalement commandés chacun par une interface de commande 1 distincte. Il sera ainsi possible de piloter aisément lesdits équipements, notamment leur mise en veille, à partir d'un seul dispositif.

## Revendications

1. Dispositif de commande (3) destiné à se connecter à un réseau de communication (R) sur lequel circulent des trames échangées entre un équipement (2) d'automatisme à commander et une interface de commande (1) connectée audit équipement (2) d'automatisme à travers ledit réseau de communication, ledit dispositif étant **caractérisé en ce qu'**il est agencé pour suppléer ladite interface de commande et **en ce qu'**il comporte :
• Un module d'enregistrement (36) agencé pour enregistrer au moins une trame émise par l'interface de commande (1) et reçue par l'équipement (2) d'automatisme , une action étant associée à ladite trame enregistrée,
• Un module de commande (37) agencé pour réémettre ladite trame (T1-Tn) mémorisée à destination de l'équipement (2) d'automatisme lorsque ladite action (A1-An) est commandée,
• un organe de commande agencé pour commander ladite action (A1-An), et **en ce que**
• Le module de commande (37) est agencé pour mettre en attente et mémoriser toutes les trames échangées entre l'interface de commande (1) et l'équipement (2) d'automatisme pendant l'exécution de ladite action,
• Le module de commande (37) est agencé pour renvoyer, après la fin de l'exécution de ladite action (A1-An), toutes les trames mises en attente pendant l'exécution de ladite action.

2. Dispositif selon la revendication 1, **caractérisé en ce qu'**il comporte une première interface réseau (31) destinée à se connecter à l'interface de commande (1) et une deuxième interface réseau (32) destinée à se connecter à l'équipement (2) d'automatisme.

3. Dispositif selon la revendication 2, **caractérisé en ce qu'**il comporte un commutateur intelligent (33) agencé pour gérer chaque trame circulant sur le réseau de communication (R) en provenance de l'interface de commande (1) ou de l'équipement (2) d'automatisme.

4. Dispositif selon l'une des revendications 1 à 3, **caractérisé en ce qu'**il comporte un module de détection (34) du type de réseau de communication et d'auto-configuration pour communiquer sur ledit réseau de communication (R).

5. Dispositif selon l'une des revendications 1 à 4, **caractérisé en ce qu'**il comporte un analyseur réseau (35) commandé par le module d'enregistrement (36) et agencé pour enregistrer ladite au moins une trame.

6. Dispositif selon l'une des revendications 1 à 5, **caractérisé en ce qu'**il est agencé pour fonctionner selon l'un des trois modes suivants : mode enregistrement, mode commande et mode normal.

7. Dispositif de commande selon l'une des revendications 1 à 6, **caractérisé en ce qu'**il comporte une interface homme-machine, actionnable par un opérateur, un émetteur couplé à un récepteur ou un système logique exécutant ladite action (A1-An) en tenant compte de la valeur prise par un ou plusieurs paramètres déterminés.
